# EUROPÄISCHE PATENTANMELDUNG

(11) **EP 2 647 934 A1**
(43) Veröffentlichungstag der Anmeldung: **09.10.2013**
(21) Anmeldenummer: 13001415.2
(22) Anmeldetag: 19.03.2013
(51) Int. Cl.: F25J 3/04

(54) **Verfahren und Vorrichtung zur Erzeugung elektrischer Energie**

(30) Priorität: 03.04.2012 DE 102012006746; 26.04.2012 EP 12002946
(71) Anmelder: Linde Aktiengesellschaft, 80331 München (DE)
(72) Erfinder: Goloubev, Dimitri, 80804 München (DE)
(74) Vertreter: Imhof, Dietmar

(57) **Zusammenfassung**

Das Verfahren und die Vorrichtung dienen zur Erzeugung elektrischer Energie in einem kombinierten System aus einem Kraftwerk (18) und einer Tieftemperatur-Luftzerlegungsanlage (7). In der Tieftemperatur-Luftzerlegungsanlage (7) wird ein Einsatzluftstrom (1) in einem Hauptluftverdichter (30,35) verdichtet, in einem Hauptwärmetauscher abgekühlt und in ein Destillationssäulen-System eingeleitet, das eine Hochdrucksäule und eine Niederdrucksäule aufweist. Ein erster sauerstoffangereicherter Produktstrom (17) wird aus dem Destillationssäulen-System in das Kraftwerk (18) eingeleitet. In einem ersten Betriebsmodus wird eine tiefkalte Flüssigkeit (21), die durch ein erstes Prozessfluid (16, 19) des Destillationssäulen-Systems gebildet, in einen Flüssigtank (22) eingeleitet und dort mindestens zum Teil gespeichert. In einem zweiten Betriebsmodus wird gespeicherte tiefkalte Flüssigkeit (23) aus dem Flüssigtank (22) entnommen und in das Destillationssäulen-System eingeleitet, ein zweites Prozessfluid (24) des Destillationssäulen-Systems auf eine hohe Temperatur erhitzt (14) und anschließend in einer heißen Expansionsturbine (26) arbeitsleistend entspannt und die in der heißen Expansionsturbine (26) erzeugte mechanische Energie mindestens teilweise in elektrische Energie (29) umgewandelt (28). Bevorzugt wird in dem zweiten Betriebsmodus ein stickstoffangereicherter Produktstrom aus der Hochdrucksäule als zweites Prozessfluid (24) des Destillationssäulen-Systems eingesetzt, auf eine hohe Temperatur erhitzt (14) und anschließend in der heißen Expansionsturbine (26) entspannt.

## Beschreibung

Die Erfindung betrifft ein Verfahren und eine Vorrichtung zur Erzeugung elektrischer Energie, bei dem in dem Kraftwerk Sauerstoff verbraucht wird, beispielsweise zur Verbrennung eines Brennstoffs (Oxyfuel-Kraftwerk) oder zur Erzeugung eines Brennstoffs durch partielle Oxidation (zum Beispiel Kohle- oder Schwerölvergasung in einem IGCC-Kraftwerk). Insbesondere betrifft die Erfindung ein Verfahren gemäß dem Oberbegriff des Patentanspruchs 1.

Dabei wird ein sauerstoffangereichertes Produkt aus dem Destillationssäulen-System in das Kraftwerk eingeleitet. Diese Einleitung kann direkt durchgeführt werden oder auch indirekt, beispielsweise über einen Puffer in Form eines Flüssigtanks oder eines Gasdruckspeichers.

Durch den immer größer werdenden Anteil erneuerbarer Energien an der Stromerzeugung, werden die Anforderungen an Lastflexibilität für solche Kraftwerke immer höher. Die Wirtschaftlichkeit, insbesondere von Oxyfuel-Kraftwerken, hängt deswegen nicht zuletzt von der Möglichkeit zur schnellen und effizienten Lastanpassung ab.

Beeinflusst von gewissen Saisonschwankungen, wird die Schwankungsbreite des Bedarfs an elektrischer Energie im Wesentlichen durch den Tag-Nacht-Zyklus bestimmt. Ist der Strombedarf im Netz niedrig (Nachtzeit), soll das Kraftwerk möglichst wenig Energie erzeugen; die Lieferung ins Netz kann dabei sogar pönalisiert werden. Steigt der Strombedarf (Tagzeit), soll das Kraftwerk wieder mit Volllast und maximaler Effizienz ins Netz liefern.

Das kurzzeitige Abstellen des Kraftwerkes in der Nacht stellt ein betriebstechnisches Problem dar. Daher wird das Kraftwerk auf minimale Last zurückgefahren. Da immer noch elektrische Energie erzeugt wird, muss diese künstlich vernichtet werden, um die Pönale für eine Einspeisung ins Netz zu vermeiden.

Bei niedrigem Bedarf an elektrischer Energie, beispielsweise während der Nacht, kann das System in einem "ersten Betriebsmodus" gefahren werden. Dabei wird ein erstes Prozessfluid des Destillationssäulen-Systems in tiefkalter flüssiger Form in einen Flüssigtank eingeleitet und dort gespeichert. Während des ersten Betriebsmodus steigt also der Flüssigkeitsspiegel im Tank und es wird damit Energie gespeichert.

Unter einem "Prozessfluid des Destillationssäulen-Systems" wird hier ein Fluid verstanden, das entweder direkt oder indirekt aus dem Destillationssäulen-System entnommen wird oder zur Einleitung in das Destillationssäulen-System bestimmt ist. Ein solches Prozessfluid kann beispielsweise durch Einsatzluft, ein stickstoffangereichertes Produkt oder ein sauerstoffangereichertes Produkt der Tieftemperatur-Luftzerlegungsanlage gebildet werden.

Umgekehrt kann bei hohem Bedarf an elektrischer Energie das System in einem "zweiten Betriebsmodus" gefahren werden, in dem im Flüssigtank gespeicherte Energie freigesetzt wird. Hierbei wird Flüssigkeit aus dem Tank in das Destillationssäulen-System eingeleitet und damit dessen Kälte genutzt. Gleichzeitig wird ein zweites Prozessfluid des Destillationssäulen-Systems auf eine hohe Temperatur erhitzt und anschließend in einer heißen Expansionsturbine entspannt und damit zusätzliche elektrische Energie erzeugt. Während des zweiten Betriebsmodus sinkt der Flüssigkeitsspiegel im Tank und es wird damit Energie freigesetzt.

Das "zweite Prozessfluid" kann die gleiche oder eine andere chemische Zusammensetzung wie das "erste Prozessfluid" aufweisen.

Unter einer "heißen Expansionsturbine" wird hier eine Expansionsturbine verstanden, an deren Eintritt im Normalbetrieb eine hohe Temperatur herrscht, und die für die arbeitsleistende Entspannung eines Stroms ausgebildet ist, der hauptsächlich oder vollständig durch Prozessfluid aus dem Destillationssäulen-System gebildet wird. Damit sind insbesondere Turbinen ausgeschlossen, die hauptsächlich mit einem Verbrennungsabgas betrieben werden, wie es bei den Expandern von klassischen Gasturbinensystemen der Fall ist.

Unter einer "hohen Temperatur", die am Eintritt der heißen Expansionsturbine herrscht, wird hier eine Temperatur verstanden, die über der Umgebungstemperatur liegt, und insbesondere mindestens 40°C beträgt, vorzugsweise mindestens 45°C; beispielsweise liegt die "hohe Temperatur" im Bereich von 45 bis 145°C.

Ein Verfahren der eingangs genannten Art und eine entsprechende Vorrichtung sind aus WO 2005064252 A1 bekannt. Hier wird im "ersten Betriebsmodus" flüssige Luft als tiefkalte Flüssigkeit gespeichert und die im "zweiten Betriebsmodus" verfügbare zusätzliche Kälte in einem Kaltverdichter genutzt, der Stickstoff aus der Niederdrucksäule des Destillationssäulen-Systems auf Druck bringt, bevor er erhitzt und der Expansionsturbine zugeleitet wird.

Der Erfindung liegt die Aufgabe zugrunde, ein energetisch besonders günstiges System zur Energie-Speicherung anzugeben mit dem Ziel, die Effizienz des Kraftwerkes während der Volllast-Zeiten möglichst stark zu verbessern.

Diese Aufgabe wird durch die kennzeichnenden Merkmale des Patentanspruchs 1 gelöst.

Bei dem erfindungsgemäßen Verfahren wird der bereits im Destillationssäulen-System vorhandene erhöhte Druck in der Hochdrucksäule genutzt, um das an der Expansionsturbine benötigte Druckgefälle zu erzeugen oder zumindest einen Teil davon. Ein Kaltverdichter für das zweite Prozessfluid des Destillationssäulen-Systems wie bei dem bekannten Verfahren ist nicht nötig. Damit entfällt einerseits der entsprechende apparative Aufwand. Vor Allem kann das erfindungsgemäße Verfahren deutlich mehr Energie pro im Tank gespeicherter Flüssigkeitsmenge zusätzlich erzeugen, weil der energetisch ungünstige Wärmeeintrag auf niedrigem Temperaturniveau entfällt. Demgemäß wird bei der Erfindung in der Regel kein Kaltverdichter zur Verdichtung des zweiten Prozessfluids eingesetzt. Insbesondere wird auch während des zweiten Betriebsmodus vorzugsweise kein kaltes Gas aus der Tieftemperatur-Luftzerlegungsanlage abgezogen; vorzugsweise wird vielmehr das zweite Prozessfluid im Hauptwärmetauscher der Tieftemperatur-Luftzerlegungsanlage angewärmt, insbesondere bis auf etwa Umgebungstemperatur.

Die Erfindung ermöglicht ein besonders effizientes Energiemanagement zwischen der Luftzerlegungsanlage und einem Sauerstoff verbrauchenden Kraftwerkwerk wie einem dem Oxyfuel-Kohlekraftwerk. Ein großer Teil der Verflüssigungsarbeit, die im ersten Betriebsmodus für die Verflüssigung des ersten Prozessfluids aufzubringen ist, wird im zweiten Betriebsmodus in der heißen Expansionsturbine zurückgewonnen. Der Wirkungsgrad einer derartigen solcher Energiespeicherung ist sehr hoch und kann beispielsweise 60 bis 65% betragen.

Wenn das Destillationssäulen-System der Tieftemperatur-Luftzerlegungsanlage mehr als zwei Trennsäulen zur Stickstoff- Sauerstoff-Trennung aufweist, kann die "Hochdrucksäule" im Sinne der Erfindung durch jede der Trennsäulen gebildet werden, die nicht die Niederdrucksäule ist, also nicht diejenige Trennsäule zur Stickstoff-Sauerstoff-Trennung, die den niedrigsten Druck aufweist. Bei einem Drei-Säulen-System kann die "Hochdrucksäule" beispielsweise durch die Trennsäule mit dem höchsten Betriebsdruck oder durch diejenige mit dem zweithöchsten Betriebsdruck gebildet werden. Ein solches Drei-Säulen-System weist zwei "Hochdrucksäulen" im Sinne der Erfindung auf.

Gemäß einer weiteren Ausgestaltung wird das zweite Prozessfluid nicht verdichtet, sondern unter dem Druck der Hochdrucksäule (abzüglich Leitungsverlusten) in die Expansionsturbine eingeleitet.

In einer speziellen Ausführungsform der Erfindung wird in dem ersten Betriebsmodus ein drittes Prozessfluid des Destillationssäulen-Systems, das ebenfalls durch einen stickstoffangereicherten Produktstrom aus der beziehungsweise einer Hochdrucksäule gebildet wird, in einer kalten Expansionsturbine arbeitsleistend entspannt, und das arbeitsleistend entspannte dritte Prozessfluid wird in dem Hauptwärmetauscher angewärmt.

Unter einer "kalten Expansionsturbine" wird eine Entspannungsmaschine verstanden, deren Austrittstemperatur deutlich unterhalb der Umgebungstemperatur liegt, insbesondere niedriger als 200 K. Ihre Eintrittstemperatur liegt ebenfalls unter der Umgebungstemperatur, jedenfalls nicht höher.

In dem Hauptwärmetauscher wird die in der kalten Expansionsturbine erzeugte Kälte auf andere Prozessströme der Tieftemperatur-Luftzerlegungsanlage übertragen, beispielsweise auf Einsatzluft. Der "Hauptwärmetauscher" dient zur Abkühlung von Einsatzluft in indirektem Wärmeaustausch mit Rückströmen aus dem Destillationssäulen-System. Er kann aus einem einzelnen oder mehreren parallel und/oder seriell verbundenen Wärmetauscherabschnitten gebildet sein, zum Beispiel aus einem oder mehreren Plattenwärmetauscher-Blöcken.

Im ersten Betriebsmodus (bei niedrigem Bedarf an elektrischer Energie) wird damit auf energetisch günstige Weise Kälte durch arbeitsleistende Entspannung von Stickstoff aus der Hochdrucksäule erzeugt, die für den Betrieb der Tieftemperatur-Luftzerlegungsanlage und die Verflüssigung des ersten Prozessfluids erforderlich ist. Während des zweiten Betriebsmodus (bei hohem Bedarf an elektrischer Energie) wird der Durchsatz durch die kalte Expansionsturbine vermindert oder die kalte Expansionsturbine ganz abgeschaltet. Die dabei frei werdende Menge an Stickstoff aus der Hochdrucksäule kann dann (zusätzlich) in der heißen Entspannungsturbine zur Erzeugung von elektrischer Energie eingesetzt werden.

Es ist besonders günstig, wenn in dem ersten Betriebsmodus ein zweiter sauerstoffangereicherter Produktstrom aus dem Destillationssäulen-System als erstes Prozessfluid des Destillationssäulen-Systems eingesetzt, in den Flüssigtank eingeleitet und dort gespeichert wird.

Damit wird nicht nur die Kälte, sondern auch die am ersten Prozessfluid verrichtete Trennarbeit in dem Flüssigtank gespeichert. Diese Trennarbeit kann dann im zweiten Betriebsmodus eingespart werden, indem die am Hauptluftverdichter der Tieftemperatur-Luftzerlegungsanlage zu verdichtete Luftmenge entsprechend zurückgenommen wird. Im Vergleich zur Flüssigpufferung von Einsatzluft ist die Speicherung von flüssigem Produktsauerstoff daher deutlich besser.

Der als erstes Prozessfluid verwendete Sauerstoff kann dabei unmittelbar dem Destillationssäulen-System entnommen werden, beispielsweise aus der Niederdrucksäule oder aus einem separat stehenden Kondensator-Behälter (zum Beispiel einem Nebenkondensator); alternativ wird er gasförmig aus dem Destillationssäulen-System abgezogen und anschließend in der Tieftemperatur-Luftzerlegungsanlage oder einem separaten Sauerstoff-Verflüssiger verflüssigt.

In vielen Fällen ist es günstig, in dem zweiten Betriebsmodus mindestens einen Teil der im Hauptluftverdichter erzeugten Kompressionswärme zur Erhitzung des zweiten

Prozessfluids stromaufwärts der heißen Expansionsturbine einzusetzen. Dies kann auf an sich bekannte Weise geschehen, entweder durch indirekten Wärmeaustausch zwischen verdichteter Einsatzluft und zweitem Prozessfluid oder doppelt indirekt durch Zwischenschaltung eines Wärmeträgerkreislaufs. Diese Art der Nutzung der Kompressionswärme kann mit der Nutzung eines anderen Teils der Kompressionswärme des Hauptluftverdichters zum Anwärmen des Speisewassers für ein Dampfkraftwerk kombiniert werden, wie sie in der deutschen Patentanmeldung 102012001606 und den dazu korrespondierenden Patentanmeldungen beschrieben ist.

Das System kann auch mit einem zweiten oder dritten Flüssigtank zu einem Wechselspeichersystem ausgebaut werden, wie es beispielsweise aus Linde-Berichte aus Technik und Wissenschaft, 54/1984, Seiten 18 bis 20, EP 399197 B1 = US 5084081 oder EP 842385 B1 = US 5953937 bekannt ist. Dabei wird ein drittes Prozessfluid als tiefkalte Flüssigkeit mindestens zeitweise in einem zweiten Flüssigtank gespeichert.

Wenn besonders viel Kälte zur Verfügung steht, kann es sinnvoll sein, den stickstoffangereicherten Produktstrom zwischen der Entnahme aus der Hochdrucksäule und der Erhitzung auf eine hohe Temperatur in einem Kaltverdichter auf einen Druck zu verdichten, der höher als der Betriebsdruck der Hochdrucksäule ist. Unter einem "Kaltverdichter" wird ein Verdichter verstanden, dessen Eintrittstemperatur unterhalb der Umgebungstemperatur liegt, insbesondere niedriger als 250 K. Die Eintrittstemperatur des Kaltverdichters ist vorzugsweise niedriger als 150 K, insbesondere niedriger als 100 K ist.

Die Erfindung betrifft außerdem eine Vorrichtung gemäß den Patentansprüchen 8 und 9. Die erfindungsgemäße Vorrichtung kann durch Vorrichtungsmerkmale ergänzt werden, die den Merkmalen der abhängigen Verfahrensansprüche entsprechen.

Die Erfindung sowie weitere Einzelheiten der Erfindung werden im Folgenden anhand von in den Zeichnungen dargestellten Ausführungsbeispielen näher erläutert. Hierbei zeigen:
- Figur 1: ein erstes Ausführungsbeispiel der Erfindung mit zwei Luftdrücken und externem Verflüssiger,
- Figur 2: ein zweites Ausführungsbeispiel der Erfindung mit einem einzigen Luftdruck,
- Figur 3: ein drittes Ausführungsbeispiel der Erfindung mit interner Wärmeintegration durch Nutzung von Kompressionswärme des Hauptluftverdichters zur Erhitzung des zweiten Prozessfluids,
- Figur 4 und Figur 5: je ein weiteres Ausführungsbeispiel mit interner Wärmeintegration,
- Figuren 6 und 7: zwei Abwandlungen der Figur 1 ohne externen Verflüssiger und mit Kälteerzeugung durch arbeitsleistende Entspannung von Einsatzluft,
- Figur 8: eine Abwandlung der Figur 1 mit Kaltverdichter und
- Figur 9: eine weitere Abwandlung von Figur 1 mit einer Wechselspeicherung mit zwei Flüssigtanks.

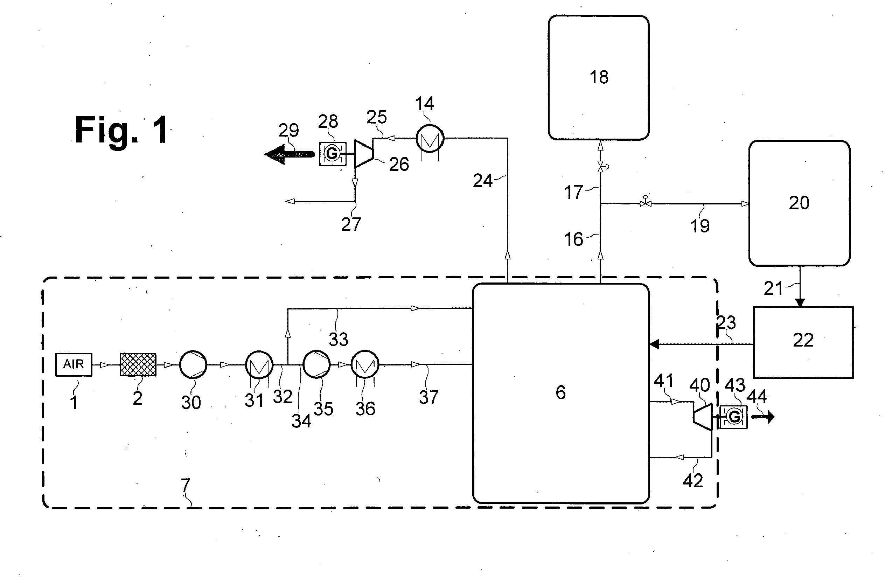

In **Figur 1** wird atmosphärische Luft 1 über ein Filter 2 von einem mehrstufigen Hauptluftverdichter 30 (main air compressor - MAC) angesaugt und einer Coldbox 6 zugeführt, die einen Hauptwärmetauscher und ein Destillationssäulen-System mit einer Hochdrucksäule und einer Niederdrucksäule aufweist (nicht dargestellt). Hochdrucksäule und Niederdrucksäule stehen über einen Hauptkondensator, der als Kondensator-Verdampfer ausgebildet ist, in wärmetauschender Verbindung. (Alternativ können auch mehr als zwei Säulen und/oder ein oder mehrere weitere Kondensator-Verdampfer in dem Destillationssäulen-System eingesetzt werden.) Hauptluftverdichter 30 und Coldbox 6 sind Teil einer Tieftemperatur-Luftzerlegungsanlage 7. Stromaufwärts der Coldbox 6 sind wie üblich Vorkühlung und Luftreinigung angeordnet; diese sind in den Zeichnungen nicht dargestellt.

Stromabwärts des Hauptluftverdichters 30 wird die auf einen ersten Druck verdichtete Luft in einem Nachkühler 31 auf etwa Umgebungstemperatur abgekühlt. Ein erster Teilstrom 33 der Luft tritt unter diesem ersten Druck in die Coldbox 6 ein. Ein zweiter Teilstrom 34 wird in einem Nachverdichter 35 (booster air compressor - BAC) mit Nachkühler 36 weiter auf einen zweiten, höheren Druck verdichtet und als Hochdruckluft 37 in die Coldbox 6 geleitet. (Die Nachkühlung 31, 36 erfolgt durch indirekten Wärmeaustausch; alternativ kann der Nachkühlschritt 36 auch durch direkten Wärmeaustausch in einem Direktkontaktkühler ausgeführt werden.)

Aus der Niederdrucksäule der Tieftemperatur-Luftzerlegungsanlage 6 wird gasförmiger Sauerstoff abgezogen, im Hauptwärmetauscher angewärmt und über Leitung 16 entnommen. Mindestens ein erster Teil davon wird als "erster sauerstoffangereicherter Produktstrom" 17 einem Oxyfuel-Kraftwerk 18 zugeleitet. Alternativ wird der Sauerstoff innenverdichtet, das heißt in flüssiger Form aus der Niederdrucksäule abgezogen, im Hauptwärmetauscher unter erhöhtem Druck verdampft oder pseudo-verdampft und anschließend unter diesem erhöhten Druck gasförmig in die Leitung 16 eingespeist.

Die Leitung 17 wird sowohl in einem ersten Betriebsmodus als auch in einem zweiten Betriebsmodus beschickt.

Im ersten Betriebsmodus strömt außerdem ein zweiter Teil 19 des Sauerstoffprodukts 16 als "zweiter sauerstoffangereicherter Produktstrom" und "erstes Prozessfluid" in einen separaten Sauerstoff-Verflüssiger 20. Dort erzeugter flüssiger Sauerstoff wird als tiefkalte Flüssigkeit 21 in einen Flüssigtank 22 eingeleitet. (Durch die Leitung 23 strömt im ersten Betriebsmodus wenig oder vorzugsweise gar keine Flüssigkeit.)

Die Kälte zur Sauerstoffverflüssigung wird hier im Verflüssiger 20 selbst erzeugt. Dieser enthält einen Verflüssigungskreislauf mit einer oder zwei Turbinen (in den Zeichnungen nicht dargestellt).

Die für den Betrieb der Tieftemperatur-Luftzerlegungsanlage erforderliche Kälte wird im ersten Betriebsmodus in einer kalten Expansionsturbine 40 erzeugt, in der ein "drittes Prozessfluid des Destillationssäulen-Systems" arbeitsleistend entspannt wird, das durch einen stickstoffangereicherten Produktstrom 41 aus der Hochdrucksäule gebildet wird, vorzugsweise durch gasförmigen Stickstoff vom Kopf der Hochdrucksäule. Der arbeitsleistend entspannte Stickstoff 42 wird in dem Hauptwärmetauscher angewärmt. Die kalte Entspannungsturbine 40 kann durch jede bekannte Bremseinrichtung gebremst werden; in dem Beispiel ist sie mit einem Generator 43 gekoppelt, der zusätzliche elektrische Energie 44 erzeugt.

Im zweiten Betriebsmodus wird die Zufuhr 19/21 zum Tank 22 verringert oder ganz abgeschaltet. Stattdessen wird flüssiger Sauerstoff aus dem Flüssigtank 22 entnommen, sodass der Flüssigkeitsspiegel im Tank 22 sinkt. Die gespeicherte tiefkalte Flüssigkeit 23 aus dem Flüssigtank 22 wird in das Destillationssäulen-System eingeleitet, insbesondere in die Niederdrucksäule, in den Verdampfungsraum eines Kondensator-Verdampfers, insbesondere des Hauptkondensators und/oder eines Nebenkondensators, und/oder in den Hauptwärmetauscher.

Durch die Flüssigeinspeisung kann der Durchsatz durch die kalte Turbine 40 verringert werden, gegebenenfalls auf Null. Die Luftmenge durch den Hauptluftverdichter 30 kann bei gleich bleibender oder sogar erhöhter Lieferung von Sauerstoff 17 an das Kraftwerk 18 verringert werden. Der Energieverbrauch der Tieftemperatur-Luftzerlegungsanlage sinkt also im zweiten Betriebsmodus.

Gleichzeitig wird Stickstoff aus der Hochdrucksäule als "stickstöffangereicherter Produktstrom" entnommen, im Hauptwärmetauscher angewärmt und als "zweites Prozessfluid des Destillationssäulen-Systems" 24 aus der Tieftemperatur-Luftzerlegungsanlage abgezogen, in einem Stickstoff-Erhitzer 14 auf eine hohe Temperatur von beispielsweise 75°C erhitzt und anschließend über Leitung 25 der arbeitsleistenden Entspannung in einer heißen Expansionsturbine 26 zugeführt. Der arbeitsleistend entspannte Stickstoff 27 wird in die Atmosphäre abgeblasen, in einem Verdunstungskühler als trockenes Gas genutzt oder als Regeneriergas in einer Adsorptionseinrichtung zur Luftreinigung eingesetzt.

Die heiße Expansionsturbine 26 ist mechanisch mit einem Generator 28 gekoppelt, der die in der Expansionsturbine erzeugte mechanische Energie in elektrische Energie 29 umwandelt.

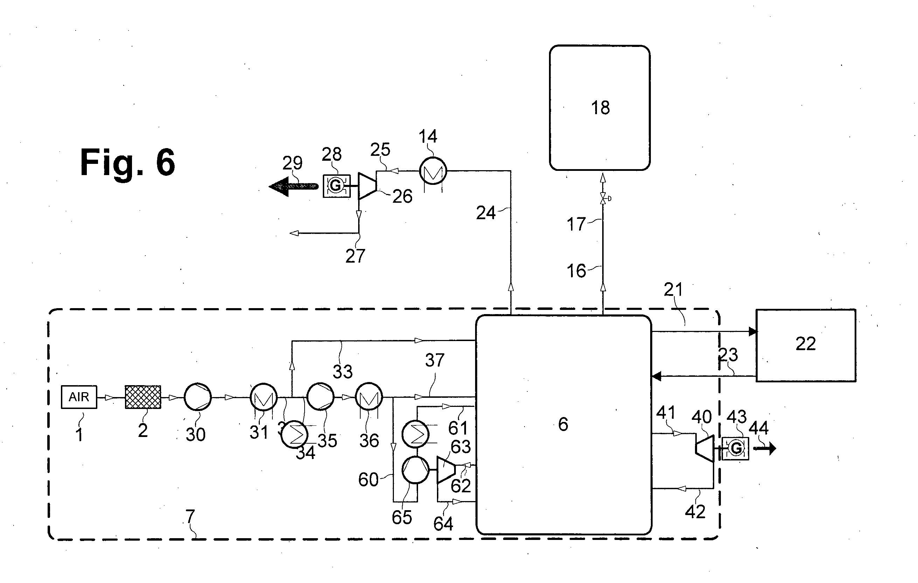

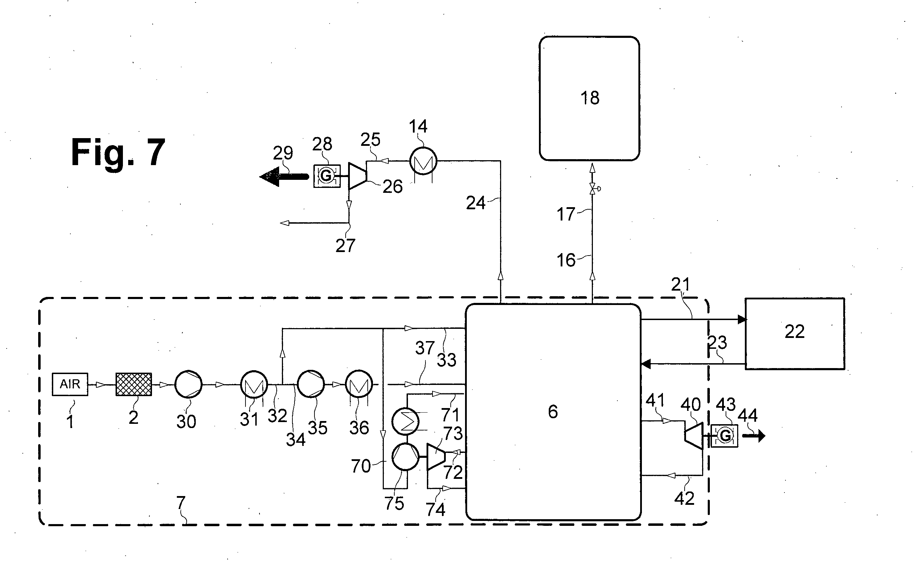

In dem ersten Betriebsmodus (zum Beispiel während der Nachtzeit) wird mehr Sauerstoff produziert, als vom Kraftwerk verbraucht wird. Dieser "überschüssige" Sauerstoff 19 wird in dem externen (oder alternativ in einem in die Tieftemperatur-Luftzerlegungsanlage integrierten - siehe Figuren 6 und 7) Sauerstoff-Verflüssiger 20 verflüssigt und in dem kryogenen Flüssigtank 22 gespeichert. Im zweiten Betriebsmodus (zum Beispiel während des Tages) wird der gespeicherte LOX 23 in die Luftzerlegungsanlage 7 eingespeist, um deren Energiebedarf zu verringern. Der Betrieb der Luftzerlegungsanlage erfolgt dabei im "LOX-Injection"-Modus (analog zu dem bekannten Begriff "LIN-Injection") mit abgeschalteter Turbine 40 zur Kälteproduktion.

Neben der Einsparung eines Teils der Trennleistung zur Sauerstoffproduktion kann auch ein großer Teil der aufgewendeten Verflüssigungsenergie zurückgewonnen werden.

Die Herstellung von Sauerstoff kostet Energie und verschlechtert damit den Gesamt-Wirkungsgrad des Kraftwerks. Daher wird von der Luftzerlegungsanlage sehr hohe Effizienz gefordert. Die energieoptimierten Verfahren zur Herstellung von unreinem Sauerstoff haben mindestens zwei Luftdruckniveaus. Zur Kälteerzeugung in dem Modus ohne LOX-Injection kann auch der Druckstickstoff aus der Hochdrucksäule mit dem niedrigstem Druck verwendet werden, falls eine Verfahren mit mehreren unter unterschiedlichem Druck betriebenen Hochdrucksäulen eingesetzt wird (siehe zum Beispiel WO 2009095188 A2 = US 2011023540 A1 oder deutsche Patentanmeldung 102011113671 und dazu korrespondierende Patentanmeldungen). Wegen des niedrigen Drucks ist diese Menge recht groß und beträgt im optimalen Fall ca. 25-30 mol-% der Gesamtluftmenge am Eintritt in die Coldbox 6.

Da im LOX-Injection-Modus (zweiter Betriebsmodus) keine Kälteproduktion erforderlich ist, wird die kalte Turbine 40 abgeschaltet und der Druckstickstoff stattdessen in der heißen Turbine zur Energieerzeugung entspannt. Die weitere Erhitzung 14 dieses Druck-GAN-Stromes vor dem Eintritt in die Turbine 26 erhöht die Turbinenleistung (Energiegewinn) und erlaubt dabei das Einstellen der Temperatur am Turbinenaustritt nahe der Umgebungstemperatur (z. B. im Falle der Nutzung des Turbinenstroms als Regeneriergas für eine Adsorptionseinrichtung).

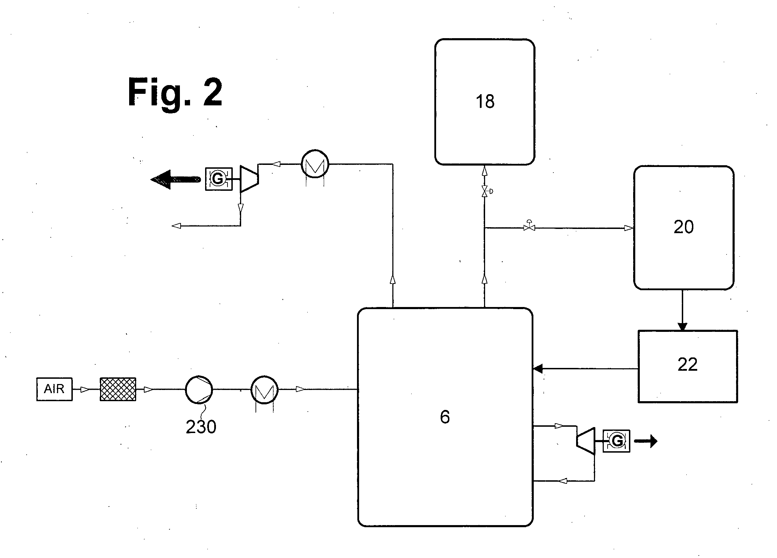

**Figur 2** unterscheidet sich von Figur 1 dadurch, dass die Gesamtluft in einem mehrstufigen Hauptluftverdichter 230 mit Zwischenkühlung auf ein einheitliches Druckniveau verdichtet wird.

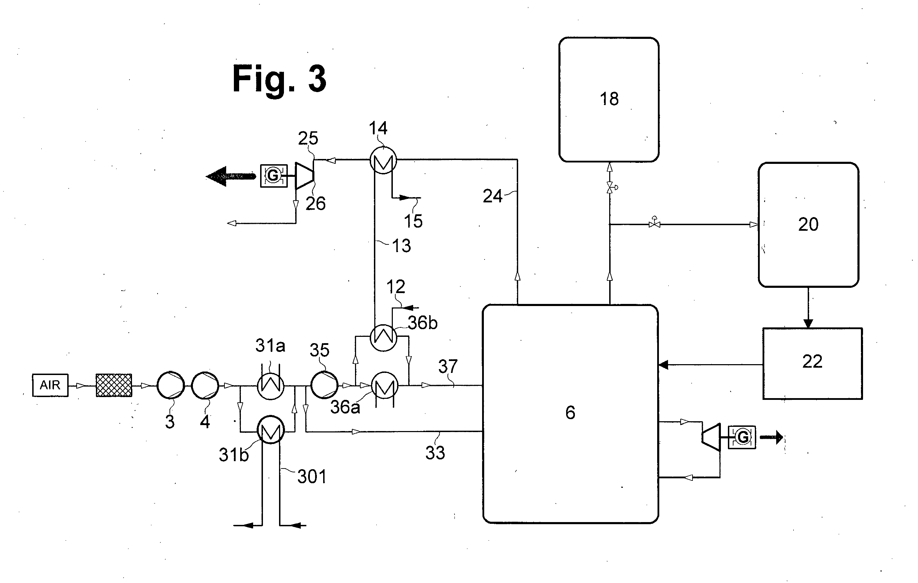

In **Figur 3** werden die Kompressionswärme des Hauptluftverdichters 3, 4, der zwei Stufen ohne Zwischenkühlung aufweist, und die Kompressionswärme des Nachverdichters 35 zur Energieerzeugung genutzt.

Im ersten Betriebsmodus sind dabei die konventionell mit Kühlwasser betriebenen Nachkühler 31 a und 36a in Betrieb (wie in Figur 1). Die Nachkühlung erfolgt durch indirekten Wärmeaustausch; alternativ kann der Nachkühlschritt 36a auch durch direkten Wärmeaustausch in einem Direktkontaktkühler ausgeführt werden.

Im zweiten Betriebsmodus wird dagegen in dem Nachkühler 31 b Speisewasser 301 für den Dampfkreislauf des Kraftwerks angewärmt, wie es in der deutschen Patentanmeldung 102012001606 und den dazu korrespondierenden Patentanmeldungen im Einzelnen beschrieben ist. (Anstelle von Speisewasser kann auch ein anderes Wärmeträgerfluid über Leitung 301 in den Nachkühler 31 b eingeführt werden, das stromabwärts des Nachkühlers Wärme in das Kraftwerk 18 einkoppelt, beispielsweise durch indirekten Wärmeaustausch mit Speisewasser.) Gleichzeitig wird die Kompressionswärme des Nachverdichters 35 in dem Nachkühler 36b durch indirekten Wärmeaustausch auf Kühlwasser 12 übertragen, das beispielsweise von einem Kühlturm kommt. Das erhitzte Kühlwasser 13 gibt in dem Stickstoff-Erhitzer 14 durch indirekten Wärmeaustausch die Wärme wieder ab und wird schließlich über Leitung 15 wieder zum Kühlturm zugeleitet. Damit kann eine Anwärm-Temperatur im Bereich von ca. 50 bis 90°C in Leitung 25 erreicht werden.

Die Varianten mit "interner Wärmeintegration", also der Anwärmung des Druck-GAN-Stromes 24 vor dem Eintritt in die Turbine 26 mit Verdichter-Abwärme, führt zum Reduzieren des Exergieverlustes am Verdichter und verbessert die Gesamteffizienz der Lösung.

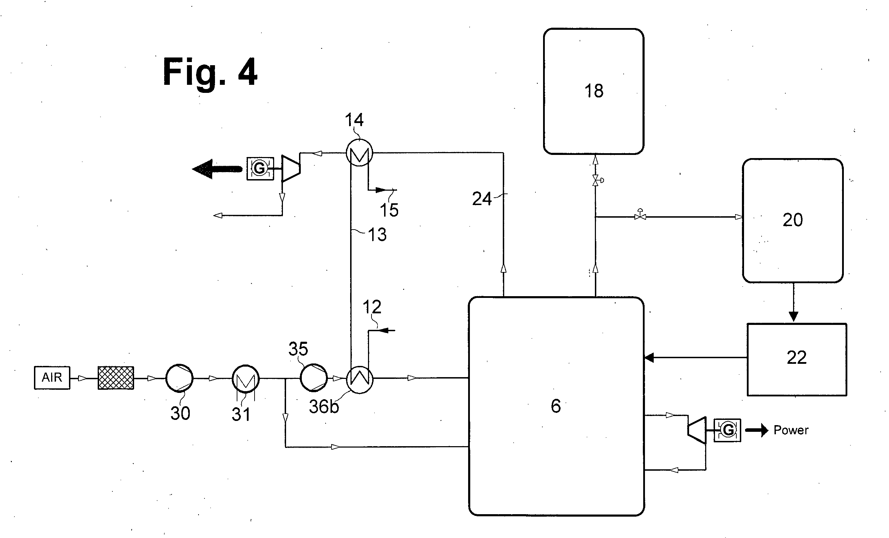

Die Kompressionswärme des Nachverdichters 35 kann aber auch genutzt werden, ohne dass zwischen verschiedenen Nachkühlern umgeschaltet wird. Eine entsprechende Ausführungsform der Erfindung ist in **Figur 4** dargestellt. Die Kühlung des Hauptluftverdichters 30 wird hier konventionell in einem kühlwasserbetriebenen Nachkühler 31 gekühlt, gegebenenfalls ergänzt durch einen oder mehrere Zwischenkühler. Falls der Hauptluftverdichter 30 als Axialverdichter ausgeführt ist, wird kein Zwischenkühler eingesetzt. Diese Lösung funktioniert auch ohne jegliche Anbindung an das Kraftwerk.

Im ersten Betriebsmodus wird der warme Wasserstrom 13 nicht wie in der Zeichnung dargestellt zum Erhitzer 14 geführt, sondern in einen Kühlturm geleitet, in dem die Wärme abgeführt wird; die Einleitung in den Kühlturm kann direkt oder nach Vermischung mit Wasser vom Austritt des Nachkühlers 31 erfolgen. Alternativ kann analog zu Figur 3 ein parallel geschalteter Nachkühler oder Direktkontaktkühler für den ersten Betriebsmodus vorgesehen sein.

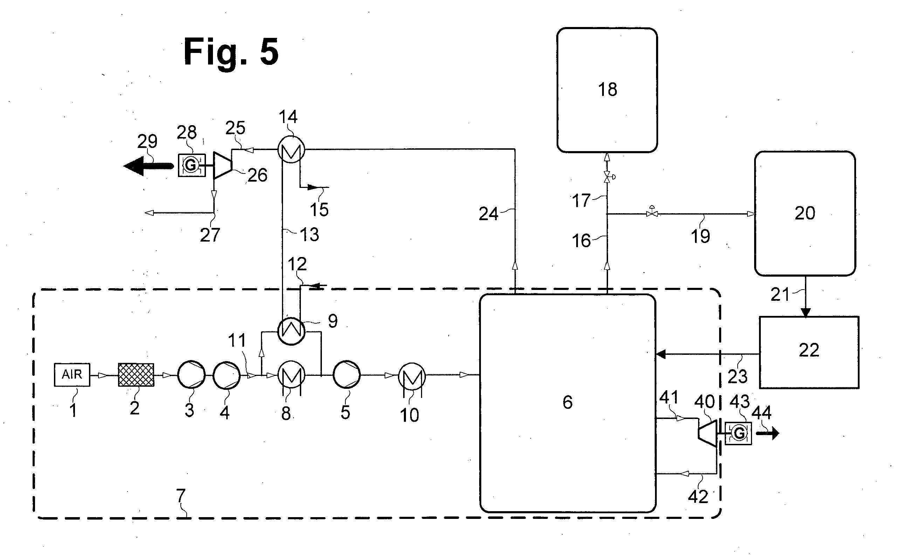

In **Figur 5** wird ein dreistufiger Hauptluftverdichter 3, 4, 5 eingesetzt, der die Gesamtluft auf einen einheitlichen Druck bringt. Ähnlich wie in Figur 3 wird zwischen den ersten beiden Stufen 3, 4 keine Zwischenkühlung eingesetzt. Die Luft 11 stromabwärts der zweiten Stufe 4 weist dadurch eine relativ hohe Temperatur auf. Damit wird im zweiten Betriebsmodus in dem Kühler 9 Kühlwasser 12, das beispielsweise von einem Kühlturm kommt, durch indirekten Wärmeaustausch erhitzt. Das erhitzte Kühlwasser 13 gibt in einem Stickstoff-Erhitzer 14 durch indirekten Wärmeaustausch die Wärme wieder ab und wird schließlich über Leitung 15 wieder zum Kühlturm zugeleitet. Die dritte Stufe 5 wird konventionell in einem Nachkühler 10 gekühlt.

Während des ersten Betriebsmodus wird auch die Luft 11 hinter der zweiten Stufe in durch einen konventionellen Kühler 8 geleitet.

Da die zu entspannende Menge 24 an Druckstickstoff geringer als die Einsatzluft-Menge 11 ist, wird im zweiten Betriebsmodus nur ein Teil der Luft durch den Nachkühler 9 geleitet; die restliche Luft wird in einem luftseitig parallel geschalteten konventionellen Nachkühler 8 abgekühlt. Im Nachtbetrieb wird die ganze Einsatzluft im Nachkühler 8 abgekühlt. Dieses Ausführungsbeispiel ist wichtig für die üblichen Prozesse mit einem einzigen Luftdruck. Bei solchen Prozessen ist der Druck in der Hochdrucksäule (PGAN-Druck) entsprechend hoch, deswegen wird hier eine viel höhere "Anwärmtemperatur" benötigt).

Die Figuren 6 und 7 entsprechen weitgehend Figur 1. Allerdings wird in Abweichung von Figur 1 kein externer Sauerstoff-Verflüssiger eingesetzt, sondern das "erste Prozessfluid" wird in der Tieftemperatur-Luftzerlegungsanlage selbst verflüssigt. Die dafür benötigte Kälte wird durch arbeitsleistende Entspannung eines Teils der Einsatzluft erzeugt.

In **Figur 6** wird dazu während des ersten Betriebsmodus ein Teil der Hochdruckluft stromabwärts des Nachverdichters 35 beziehungsweise dessen Nachkühlers 36 als Turbinenluftstrom 60, 61 abgezweigt, im Hauptwärmetauscher der Tieftemperatur-Luftzerlegungsanlage 6 auf eine Zwischentemperatur abgekühlt, über Leitung 62 wieder entnommen und in einer Luftturbine 63 arbeitsleistend entspannt. Die arbeitsleistend entspannte Luft 64 wird in die Tieftemperatur-Luftzerlegungsanlage 6 eingeleitet , insbesondere in die Niederdrucksäule der Tieftemperatur-Luftzerlegungsanlage 6. Stromaufwärts der Einleitung in den Hauptwärmetauscher wird die Turbinenluft 60 in einem Nachverdichter 65 weiter verdichtet, der von der Turbine 63 angetrieben wird; Turbine 63 und Nachverdichter 65 sind unmittelbar mechanisch gekoppelt und weisen vorzugsweise eine gemeinsame Welle auf. Mit Hilfe der zusätzlich erzeugten Kälte kann innerhalb der Tieftemperatur-Luftzerlegungsanlage erzeugter flüssiger Sauerstoff 21 aus der Tieftemperatur-Luftzerlegungsanlage flüssig als "erstes Prozessfluid" abgezogen und als "tiefkalte Flüssigkeit" in den Sauerstofftank 22 eingeleitet werden.

Die Turbinenluft 70, 71 in **Figur 7** wird dagegen auf dem niedrigeren Druckniveau des ersten Teilstroms 33 abgezweigt, also stromabwärts des Hauptluftverdichters 30 beziehungsweise dessen Nachkühlers 36. Analog zu Figur 6 wird der Turbinenluftstrom 70, 71 im Hauptwärmetauscher der Tieftemperatur-Luftzerlegungsanlage 6 auf eine Zwischentemperatur abgekühlt, über Leitung 72 wieder entnommen und in einer Luftturbine 73 arbeitsleistend entspannt. Die arbeitsleistend entspannte Luft 74 wird der Tieftemperatur-Luftzerlegungsanlage 6 zugeleitet, insbesondere der Niederdrucksäule. Stromaufwärts der Einleitung in den Hauptwärmetauscher wird die Turbinenluft 70 in einem Nachverdichter 75 weiter verdichtet, der von der Turbine 73 angetrieben wird; Turbine 73 und Nachverdichter 75 sind unmittelbar mechanisch gekoppelt und weisen vorzugsweise eine gemeinsame Welle auf.

Die Luftturbine 63, 73 wird bei den Verfahren der Figuren 6 und 7 insbesondere während des ersten Betriebsmodus betrieben, um - anstelle des Sauerstoff-Verflüssigers 20 der Figur 1 - die Kälte für die Bildung der tiefkalten Flüssigkeit zu erzeugen. Während des zweiten Betriebsmodus wird der Durchsatz durch die Luftturbine 63, 73 reduziert oder die Luftturbine wird ganz abgeschaltet.

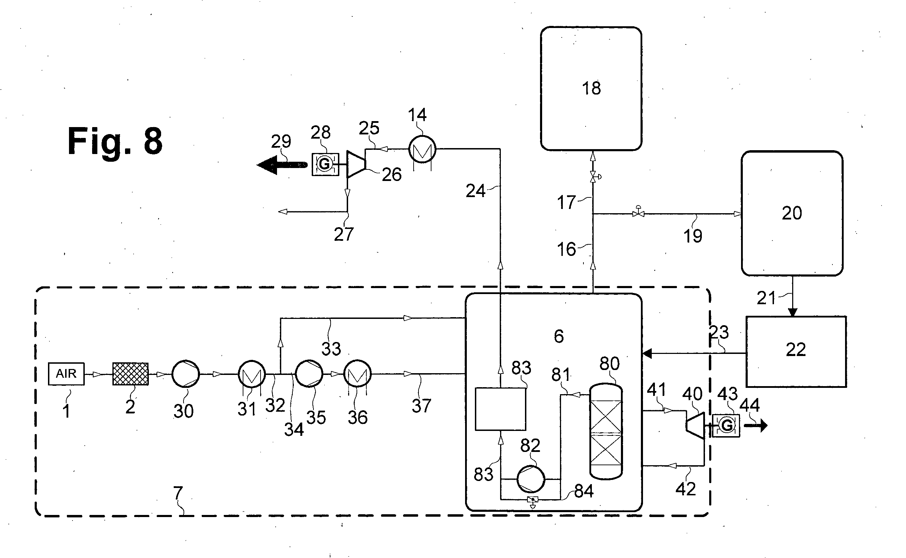

**Figur 8** entspricht weitgehend Figur 1. Zusätzlich wird jedoch während des zweiten Betriebsmodus ein Kaltverdichter 82 eingesetzt, in dem der Stickstoff 81 aus der Hochdrucksäule 80 (das "zweite Prozessfluid") über den Betriebsdruck der Hochdrucksäule hinaus weiter verdichtet wird, beispielsweise von einem Betriebsdruck am Kopf der Hochdrucksäule von 2,7 bar auf einen Enddruck von 4.7bar (oder auch höher). Der Stickstoff 81 tritt unter der Temperatur der Hochdrucksäule in den Kaltverdichter 82 ein und wird bei einer Zwischentemperatur des Hauptwärmetauschers in diesen eingeführt und auf etwa Umgebungstemperatur angewärmt. Anschließend strömt er wie in Figur 1 über Leitung 24 zum Stickstoff-Erhitzer 14 und weiter über Leitung 25 zur heißen Expansionsturbine 26. Mit dieser Variante kann das Druckverhältnis an der Expansionsturbine 26 erhöht und damit im zweiten Betriebsmodus mehr elektrische Energie 29 erzeugt werden. Im ersten Betriebsmodus steht die Expansionsturbine 26 still und es muss mehr flüssiger Sauerstoff erzeugt und gespeichert werden als bei Figur 1, das heißt mehr als der Betrieb der Tieftemperatur-Luftzerlegungsanlage (ohne Kaltverdichter) im zweiten Betriebsmodus benötigt.

Außerdem ist eine Bypass-Leitung 84 um den Kaltverdichter 82 vorgesehen, mit der das System in einem dritten Betriebsmodus gefahren werden kann, der dem zweiten Betriebsmodus von Figur 1 entspricht. Damit wird etwas weniger Energie als im zweiten Betriebsmodus (der Figur 8) erzeugt.

Dies kann zum Beispiel zum Abdecken von Verbrauchsspitzen während des Tagbetriebs genutzt werden ("Peakshaving"): Im normalen Tagbetrieb wird das System dann im dritten Betriebsmodus (Bypass 84 um den Kaltverdichter 82) gefahren und erzeugt dabei deutlich mehr Energie als im ersten Betriebsmodus. Bei Verbrauchsspitzen, die während des Tages auftreten, wird zusätzlich der Kaltverdichter 82 genutzt und damit im zweiten Betriebsmodus noch mehr Energie als im dritten Betriebsmodus erzeugt.

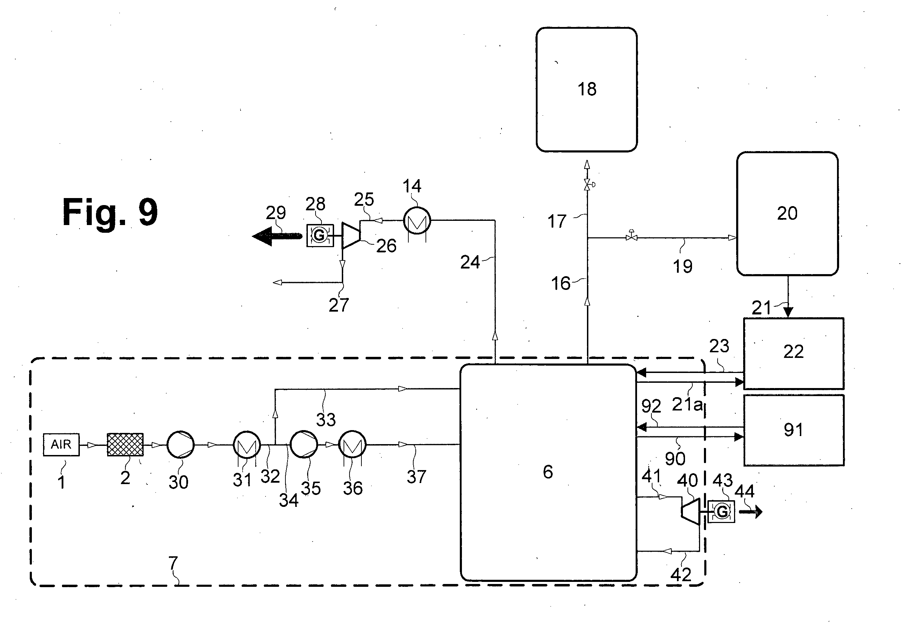

In **Figur 9** ist das System von Figur 1 zu einer Wechselspeicheranlage ausgebaut. Dazu wird ein "drittes Prozessfluid" 90 als tiefkalte Flüssigkeit mindestens zeitweise in einem zweiten Flüssigtank 91 gespeichert. Als drittes Prozessfluid wird hier Stickstoff aus der Hochdrucksäule eingesetzt. Dieser wird im nicht dargestellten Hauptkondensator der Tieftemperatur-Luftzerlegungsanlage verflüssigt und über Leitung 90 in Form tiefkalter Flüssigkeit in den zweiten Flüssigtank 91 eingeleitet, der als Stickstofftank ausgebildet ist. Während des zweiten Betriebsmodus (zum Beispiel im Tagbetrieb) wird gespeicherter flüssiger Sauerstoff über Leitung 23 in die Anlage eingespeist und flüssiger Stickstoff 90 in den Tank gefahren. In dieser Zeit wird der Sauerstofftank 22 praktisch entleert und der Stickstofftank gefüllt. Im ersten Betriebsmodus (zum Beispiel im Nachtbetrieb) wird der Stickstofftank entleert (flüssiger Stickstoff 92 wird in die Tieftemperatur-Luftzerlegungsanlage eingespeist) und der Sauerstofftank gefüllt (flüssiger Sauerstoff 21 a aus der Tieftemperatur-Luftzerlegungsanlage zusammen mit dem extern verflüssigten Sauerstoff 21). Damit kann im zweiten Betriebsmodus zusätzliche Energie zurückgewonnen werden. Außerdem kann der Übergang zwischen erstem und zweitem Betriebsmodus und zurück milder gestaltet werden.

Die Abwandlungen der Figuren 6 bis 9 im Vergleich zu Figur 1 sind analog auf die Ausführungsformen der Erfindung gemäß den Figuren 2 bis 5 anwendbar. Außerdem können auch die Abwandlungen der Figuren 6 und 9 untereinander kombiniert werden.

In einer Abwandlung der Ausführungsbeispiele nach den Figuren 1 bis 9 wird die kalte Turbine 40 weggelassen. In diesem Fall wird die gesamte Prozesskälte für die Tieftemperatur-Luftzerlegungsanlage in dem externen Verflüssiger 20 erzeugt. In diesem Fall wird ständig im Verflüssiger erzeugte Flüssigkeit in das Destillationssäulen-System geleitet, auch im ersten Betriebsmodus. Im zweiten Betriebsmodus läuft der Verflüssiger 20 mit verringertem Durchsatz oder wird ganz abgeschaltet. Diese Verfahrensvariante kommt insbesondere dann zum Einsatz, wenn der Betriebsmodus in einem regelmäßigen Tag-Nacht-Zyklus gewechselt wird.

## Patentansprüche

1. Verfahren zur Erzeugung elektrischer Energie in einem kombinierten System aus einem Kraftwerk (18) und einer Tieftemperatur-Luftzerlegungsanlage (7), wobei
- in derTieftemperatur-Luftzerlegungsanlage (7) ein Einsatzluftstrom (1) in einem Hauptluftverdichter (3, 4, 5; 30) verdichtet, in einem Hauptwärmetauscher abgekühlt und in ein Destillationssäulen-System eingeleitet wird, das eine Hochdrucksäule und eine Niederdrucksäule aufweist, und
- ein erster sauerstoffangereicherter Produktstrom (17) aus dem Destillationssäulen-System in das Kraftwerk (18) eingeleitet wird,
- und wobei in einem ersten Betriebsmodus
- eine tiefkalte Flüssigkeit (21, 21 a), die durch ein erstes Prozessfluid (16, 19) des Destillationssäulen-Systems gebildet wird, in einen Flüssigtank (22) eingeleitet und dort mindestens zum Teil gespeichert wird,
- und in einem zweiten Betriebsmodus
- gespeicherte tiefkalte Flüssigkeit (23) aus dem Flüssigtank (22) entnommen und in das Destillationssäulen-System eingeleitet wird,
- ein zweites Prozessfluid (24) des Destillationssäulen-Systems auf eine hohe Temperatur erhitzt (14) und anschließend in einer heißen Expansionsturbine (26) arbeitsleistend entspannt wird und
- die in der heißen Expansionsturbine (26) erzeugte mechanische Energie mindestens teilweise in elektrische Energie (29) umgewandelt (28) wird,
**dadurch gekennzeichnet, dass** in dem zweiten Betriebsmodus ein stickstoffangereicherter Produktstrom aus der Hochdrucksäule als zweites Prozessfluid (24) des Destillationssäulen-Systems eingesetzt, auf eine hohe Temperatur erhitzt (14) und anschließend in der heißen Expansionsturbine (26) entspannt wird.

2. Verfahren nach Anspruch 1, **dadurch gekennzeichnet, dass** das zweite Prozessfluid (24) zwischen Hochdrucksäule und heißer Expansionsturbine (26) nicht verdichtet wird.

3. Verfahren nach Anspruch 1 oder 2, **dadurch gekennzeichnet, dass** in dem ersten Betriebsmodus ein drittes Prozessfluid (41) des Destillationssäulen-Systems, das ebenfalls durch einen stickstoffangereicherten Produktstrom aus der beziehungsweise einer Hochdrucksäule gebildet wird, in einer kalten Expansionsturbine (40) arbeitsleistend entspannt und das arbeitsleistend entspannte dritte Prozessfluid (42) in dem Hauptwärmetauscher angewärmt wird.

4. Verfahren nach einem der Ansprüche 1 bis 3, **dadurch gekennzeichnet, dass** in dem ersten Betriebsmodus ein zweiter sauerstoffangereicherter Produktstrom aus dem Destillationssäulen-System als erstes Prozessfluid (19, 21, 21 a) des Destillationssäulen-Systems eingesetzt, in den Flüssigtank (22) eingeleitet und dort gespeichert wird.

5. Verfahren nach einem der Ansprüche 1 bis 4, **dadurch gekennzeichnet, dass** in dem zweiten Betriebsmodus mindestens einen Teil der im Hauptluftverdichter (3, 4, 5; 30) oder in einem Nachverdichter (35) für Luft erzeugten Kompressionswärme zur Erhitzung (14) des zweiten Prozessfluids (24) stromaufwärts der heißen Expansionsturbine (26) eingesetzt wird.

6. Verfahren nach einem der Ansprüche 1 bis 5, **dadurch gekennzeichnet, dass** ein drittes Prozessfluid als tiefkalte Flüssigkeit mindestens zeitweise in einem zweiten Flüssigtank gespeichert wird.

7. Verfahren nach einem der Ansprüche 1 bis 6, **dadurch gekennzeichnet, dass** der stickstoffangereicherte Produktstrom (81) zwischen der Entnahme aus der Hochdrucksäule (80) und der Erhitzung (14) auf eine hohe Temperatur in einem Kaltverdichter (82) auf einen Druck verdichtet wird, der höher als der Betriebsdruck der Hochdrucksäule (80) ist, wobei insbesondere die Eintrittstemperatur des Kaltverdichters niedriger als 150 K, insbesondere niedriger als 100 K ist.

8. Vorrichtung zur Erzeugung elektrischer Energie
- mit einem kombinierten System aus einem Kraftwerk (18) und einer Tieftemperatur-Luftzerlegungsanlage (7),
- wobei die Tieftemperatur-Luftzenegungsanlage (7) einen Hauptluftverdichter (3, 4, 5; 30) zum Verdichten eines Einsatzluftstroms (1), einen Hauptwärmetauscher zum Abkühlen des verdichteten Einsatzstroms, ein Destillationssäulen-System, das eine Hochdrucksäule und eine Niederdrucksäule aufweist, und Mittel zum Einleiten des abgekühlten Einsatzluftstroms in das Destillationssäulen-System aufweist, und
- mit Mitteln zum Einleiten eines ersten sauerstoffangereicherten Produktstroms (17) aus dem Destillationssäulen-System in das Kraftwerk (18),
- mit Mitteln zum Einleiten einer tiefkalten Flüssigkeit (21, 21 a), die durch ein erstes Prozessfluid (16, 19) des Destillationssäulen-Systems gebildet wird, in einen Flüssigtank (22) während eines ersten Betriebsmodus,
- und mit
- Mitteln zum Entnehmen gespeicherter tiefkalter Flüssigkeit (23) aus dem Flüssigtank (22) entnommen und zum Einleiten der entnommenen Flüssigkeit in das Destillationssäulen-System während eines zweiten Betriebsmodus,
- Mitteln zum Erhitzen (14) eines zweiten Prozessfluids (24) des Destillationssäulen-Systems auf eine hohe Temperatur,
- einer heißen Expansionsturbine (26) zum arbeitsleistenden Entspannen des erhitzten zweiten Prozessfluids während des zweiten Betriebsmodus und
- Mitteln zum Umwandeln (28) der in der heißen Expansionsturbine (26) erzeugten mechanischen Energie in elektrische Energie (29) während des zweiten Betriebsmodus,
**gekennzeichnet durch** Mittel zum Entnehmen eines stickstoffangereicherter Produktstrom aus der Hochdrucksäule als zweites Prozessfluid (24) des Destillationssäulen-Systems und Mittel zum Zuführen des entnommenen stickstoffangereicherten Produktstroms zu den Mitteln zum Erhitzen (14) und zu der heißen Expansionsturbine (26) während des zweiten Betriebsmodus.

9. Vorrichtung nach Anspruch 8, **gekennzeichnet durch** Regelungsmittel zum automatischen Umschalten zwischen dem ersten und dem zweiten Betriebsmodus.
